# FASCICULE DE BREVET EUROPEEN

(11) **EP 1 391 702 B1**
(45) Date de publication et mention de la délivrance du brevet: **18.03.2009**
(21) Numéro de dépôt: 03291963.1
(22) Date de dépôt: 05.08.2003
(51) Int. Cl.: G01F 11/02, G01F 13/00

(54) **Machine doseuse**
Dosiermaschine
Dosing machine

(30) Priorité: 21.08.2002 FR 0210441
(43) Date de publication de la demande: 25.02.2004
(73) Titulaire: Tremark Technologies Inc., Mont Saint Hilaire, Quebec J3H 5M8 (CA)
(72) Inventeur: Marchadour, Jean-Charles, 29120 Pont-l'Abbe (FR)
(74) Mandataire: Jaunez, Xavier

(56) Documents cités:
- US-A- 4 399 932
- US-A- 4 991 632
- US-A- 5 088 517

## Description

### DOMAINE DE L'INVENTION

La présente invention concerne une machine doseuse utilisable dans les installations d'emballage ou de conditionnement notamment pour la mise en boîte de produits alimentaires consistants tels que des chairs, des pâtés, du corned beef, de la choucroute, des épinards en branche, du choux... et des produits se présentant sous la forme d'agglomérats pâteux tels que des carottes râpées avec ou sans jus.

### ARRIERE-PLAN DE L'INVENTION

Une machine doseuse comprend généralement un bâti sur lequel sont montés une trémie destinée à recevoir en vrac les produits à mettre en boîte, un conduit débouchant dans la trémie à proximité d'un fond de celle-ci et recevant une partie d'une vis de transfert s'étendant le long du fond de la trémie, et un cylindre de dosage qui reçoit à coulissement un piston d'aspiration et de refoulement. Pour des raisons d'encombrement, le cylindre de dosage est disposé horizontalement sous la trémie. Le fond de la trémie et le conduit sont inclinés par rapport à l'horizontale de telle manière que le cylindre et le conduit sont raccordés par une vanne à tournant en formant entre eux un angle aigu. Ce type de machine n'est pas adapté à tous les produits car certains de ceux-ci, notamment les carottes râpées et les produits collants, tendent à former un bouchon à proximité de la vanne à tournant. Si ce bouchon n'est pas détecté à temps et que la vis de transfert n'est pas stoppée, l'effort résistant au mouvement des produits s'accroît du fait du bouchon et augmente les sollicitations mécaniques subies par la vis de transfert ainsi que par les organes d'entraînement de celle-ci. Ceci risque de détériorer un ou plusieurs des composants de la machine.

L'arrière-plan technologique de l'invention peut être complété en citant le document US-A-4 399 932 qui décrit un distributeur volumétrique avec une vanne à deux clapets décalés angulairement sur un arbre tournant commun, et le document US-A-5 088 517 qui décrit un injecteur de produit fluide dans un flux de liquide.

Le document US-A-4 991 632 décrit une machine doseuse avec un conduit et un cylindre de dosage horizontal.

### OBJET DE L'INVENTION

L'invention a pour but de proposer une machine doseuse ne présentant pas les inconvénients et limitations des machines antérieures, et en particulier une machine qui soit adaptée à des produits difficiles à doser, comme les carottes râpées ou les produits collants.

### BREVE DESCRIPTION DE L'INVENTION

Le but de l'invention est atteint par une machine doseuse selon la revendication 1.

De préférence, le conduit et la vis de transfert sont sensiblement horizontaux et le cylindre de dosage s'étend de façon sensiblement verticale sous la vanne à tournant.

Le remplissage du cylindre de dosage est alors facilité sous l'effet de la gravité.

Avantageusement, le piston et la vis de transfert sont actionnés chacun par un moteur associé.

L'utilisation de deux moteurs indépendants pour le déplacement du piston et l'actionnement de la vis de transfert permet de commander ces moteurs indépendamment l'un de l'autre, autorisant un réglage très fin de la quantité à doser. En outre, on évite également d'abîmer le produit.

Selon un mode de réalisation particulier, la vanne à tournant est montée sur le bâti pour être déplaçable entre une position active dans laquelle elle est appliquée contre le conduit et le cylindre de dosage et une position inactive dans laquelle elle est écartée du conduit et du cylindre de dosage pour libérer l'accès à ceux-ci.

Il est alors aisé de procéder au nettoyage de la machine lorsque la vanne à tournant est en position inactive

De préférence alors, la machine comprend des moyens pour décoller la vanne à tournant du conduit et du cylindre de dosage respectivement selon une direction sensiblement axiale du conduit et une direction sensiblement axiale du cylindre de dosage.

Ainsi, lors du déplacement de la vanne à tournant entre sa position active et sa position inactive, on limite le risque de détériorer les pièces en contact comme les éléments d'étanchéité qui sont interposés entre la vanne à tournant d'une part et le conduit et le cylindre de dosage d'autre part.

D'autres caractéristiques et avantages de l'invention seront évidentes suivant les revendications 2 à 8.

### BREVE DESCRIPTION DES DESSINS

Il sera fait référence aux dessins annexés, parmi lesquels :
- la figure 1 est une vue schématique partielle, de profil et en coupe, d'une machine doseuse selon l'invention,
- la figure 2 est une vue en coupe de l'organe d'actionnement d'un piston d'un cylindre de dosage,
- les figures 3, 4 et 5 sont des vues partielles de profil de la machine doseuse, décomposant le mouvement de constituants de la machine doseuse entre une position active et une position inactive,
- la figure 6 est une vue partielle de dessus de la machine doseuse pour une position inactive de ces constituants.

### DESCRIPTION DETAILLEE DE L'INVENTION

En référence aux figures, la machine doseuse conforme à l'invention comprend un bâti 1 sur lequel est montée une trémie généralement désignée en 2, d'axe vertical et destinée à recevoir en vrac les produits à doser puis à mettre en boîte.

La trémie 2 comporte une cuve 3 délimitée par une paroi latérale dont une extrémité est obturée par un fond 4 horizontal et une extrémité opposée comporte une collerette 5 formant un appui pour un entonnoir 6 relié au bâti 1 par une articulation 7 pour basculer autour d'un axe horizontal perpendiculaire à l'axe de la trémie 2 entre une position en appui contre la collerette d'appui 5 de la cuve 3 et une position dégagée vers l'arrière par rapport à la cuve 3.

Un racleur 8 est monté à l'intérieur de la trémie 2 le long d'une génératrice de l'entonnoir 6. Le racleur 8 possède une extrémité inférieure solidaire d'une couronne dentée 9 montée pour pivoter sur la collerette 5 de la cuve 3 sous l'action d'un pignon, non visible sur les figures, qui est relié à un arbre de sortie d'un moteur et qui engrène avec la couronne dentée 9 pour déplacer le racleur 8 selon un mouvement de balayage de la face interne de l'entonnoir 6. Un organe de mélange peut être associé ou substitué au racleur 8 pour brasser les produits dans l'entonnoir 6.

Deux vis de transfert 10 s'étendent horizontalement au fond de la cuve 3. Chaque vis de transfert 10 possède, par référence à un sens de transfert des produits, une extrémité aval passant par une ouverture 11 pratiquée dans la paroi latérale de la cuve 3 pour s'étendre en saillie de la cuve 3 dans un conduit 12 horizontal qui débouche à proximité du fond 4 de la cuve 3 et une extrémité amont solidaire d'une extrémité d'un arbre 13 qui traverse la paroi latérale de la cuve 3 et qui est reçu dans un palier 14 monté à l'extérieur de la cuve 3. Les arbres 13 ont des extrémités opposées aux vis de transfert 10 qui sont équipées de pignons 15 engrenant l'un avec l'autre et l'un des arbres 13 est en outre pourvu sur cette extrémité d'une poulie menée 16 reliée par l'intermédiaire d'une courroie 17 à une poulie menante 18 reliée à un arbre de sortie d'un servomoteur 19.

Chaque conduit 12 a une surface interne enveloppant l'extrémité aval de la vis de transfert 10 correspondante. Des rainures axiales 20 sont toutefois ménagées dans cette surface interne afin de constituer un obstacle à la rotation des produits autour de l'axe de la vis de transfert 10 de manière à favoriser un déplacement axial de ces produits.

Chaque conduit 12 possède une extrémité libre qui est en contact par l'intermédiaire de moyens d'étanchéité avec un corps d'une vanne à tournant 21 qui est également en contact par l'intermédiaire de moyens d'étanchéité avec une extrémité supérieure d'un cylindre de dosage 22 d'axe vertical(les éléments d'étanchéité sont par exemple ici constitués de joints annulaires partiellement emboîtables ayant des formes tronconiques complémentaires).

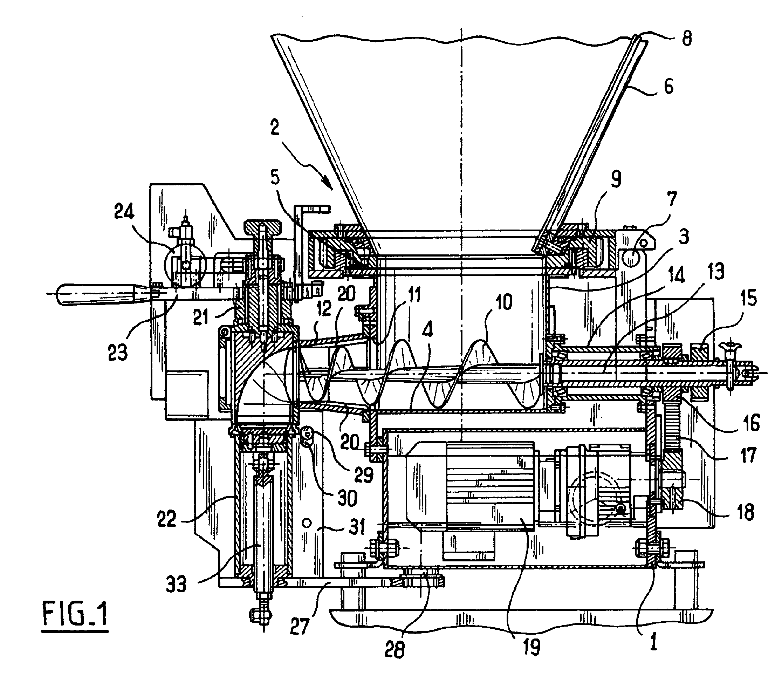

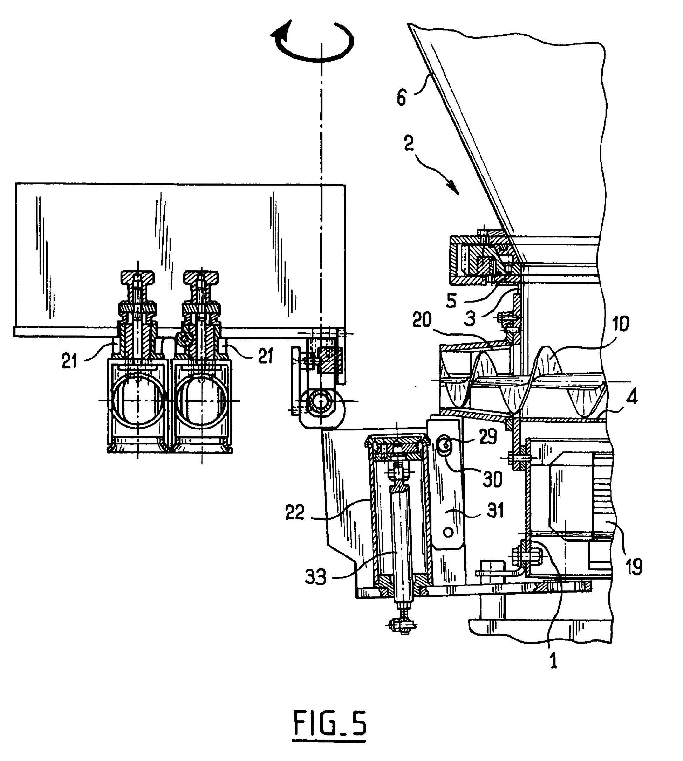

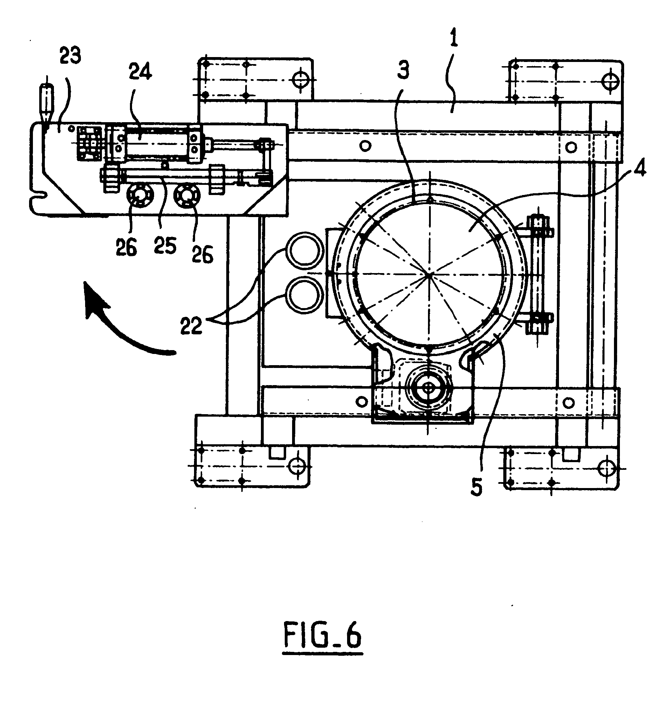

Le tournant de la vanne à tournant 21 délimite un canal coudé selon un angle de 90°. Les vannes à tournant 21 sont montées sur un élément support 23 qui est monté sur le bâti 1 pour être mobile entre une position active (représentée à la figure 1) dans laquelle le corps des vannes à tournant 21 est en appui contre les conduits 12 et les cylindres de dosage 22 et une position inactive (représentée aux figures 5 et 6) dans laquelle les vannes à tournant sont écartées des conduits 12 et des cylindres de dosage 22 pour libérer l'accès à ceux-ci. Le mouvement des vannes à tournant 21 entre la position active et la position inactive sera détaillé ultérieurement dans la description. Lorsque les vannes à tournant 21 sont en position active, le tournant de chaque vanne à tournant 21 est mobile entre une position d'alimentation du cylindre de dosage 22 (représentée notamment à la figure 1) dans laquelle le canal coudé relie le conduit 12 au cylindre de dosage 22 et une position d'évacuation du cylindre de dosage 22 dans laquelle le canal coudé relie le cylindre de dosage à un support non représenté d'une boîte à remplir. Les tournants sont entraînés entre la position d'alimentation des cylindres de dosage 22 et la position d'évacuation des cylindres de dosage 22 par l'intermédiaire d'un vérin 24 monté sur l'élément support 23 pour actionner de manière connue en elle-même une crémaillère 25 avec laquelle engrènent des pignons 26 solidaires des tournants (voir en particulier la figure 6).

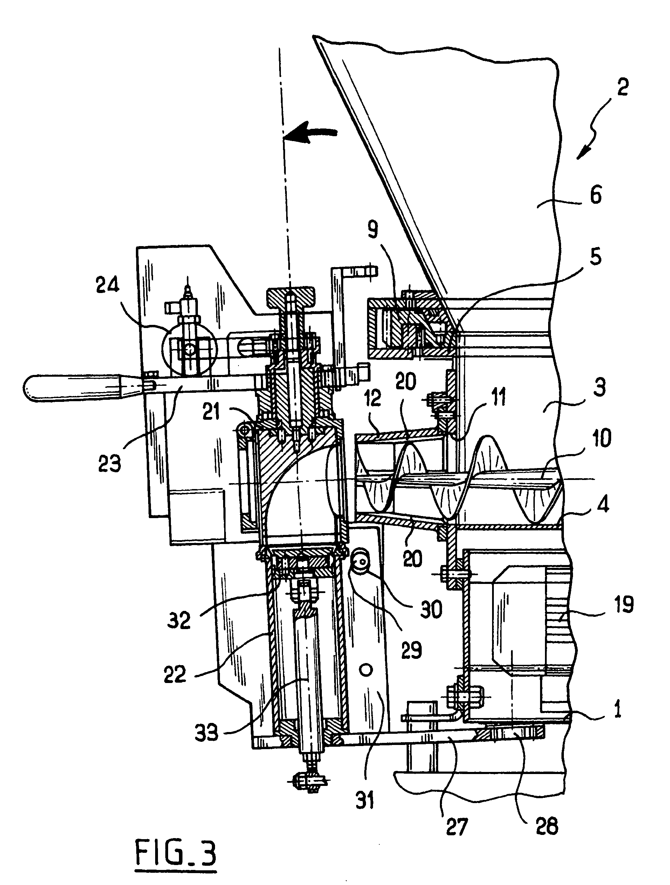

L'élément support 23 est relié au bâti 1 par une platine 27 ayant une extrémité reliée au bâti 1 par l'intermédiaire d'une liaison élastique comme ici un tampon élastiquement déformable 28. Le tampon élastiquement déformable 28 est agencé pour permettre un débattement angulaire de la platine 27, autour d'un axe perpendiculaire aux axes des conduits 12 et des cylindres de dosage 22, entre la position active des vannes à tournant 21 (représentée à la figure 1) dans laquelle la platine 27 est horizontale et une première position intermédiaire (représentée à la figure 3) dans laquelle la platine est inclinée de telle manière que le corps des vannes à tournant 21 est écarté des extrémités libres des conduits 12. Le blocage de la platine 27 entre ces deux positions est assuré par un excentrique 29 monté sur le bâti 1 pour pivoter autour d'un axe parallèle à l'axe de débattement et reçu dans une lumière 30 ménagée dans une plaque 31 solidaire de la platine et perpendiculaire à celle-ci. La lumière 30 est oblongue et possède un grand axe perpendiculaire à la platine 27 et a une largeur égale à un diamètre de l'excentrique 29. L'excentrique 29 est agencé pour être manipulé par un opérateur.

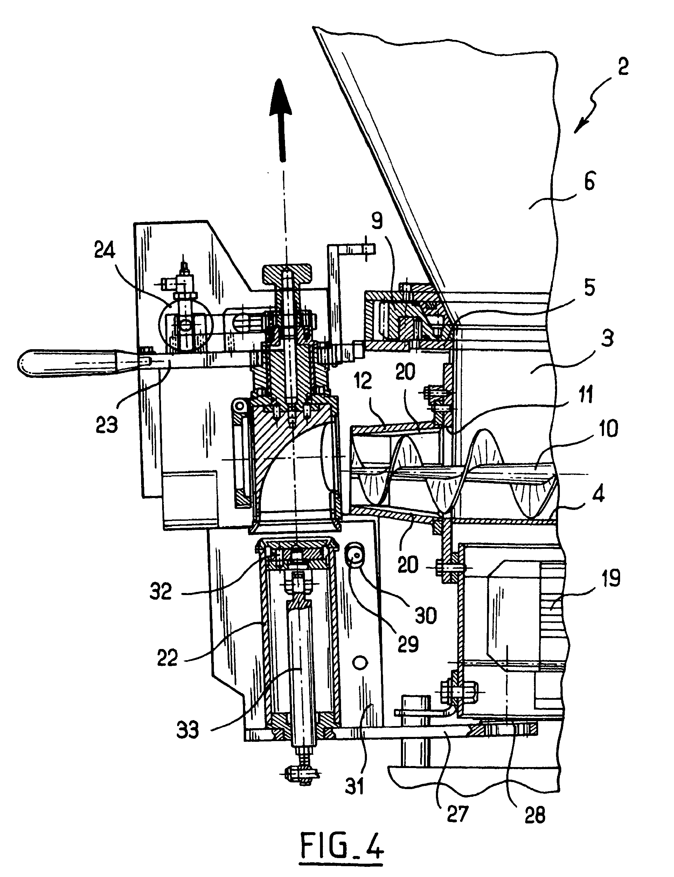

L'élément support 23 est monté sur la platine 27 pour basculer autour d'un axe parallèle à l'axe des conduits 12 entre la première position intermédiaire (représentée à la figure 3) et une deuxième position intermédiaire (représentée à la figure 4) dans laquelle le corps des vannes à tournant 21 est légèrement écartée des extrémités supérieures des cylindres de dosage 22.

L'élément support 23 est également monté sur la platine 27 de manière à pivoter de façon excentrée autour d'un axe perpendiculaire à la platine 27 entre la deuxième position intermédiaire des vannes à tournant 21 (représentée à la figure 4) et la position inactive(représentée aux figures 5 et 6).

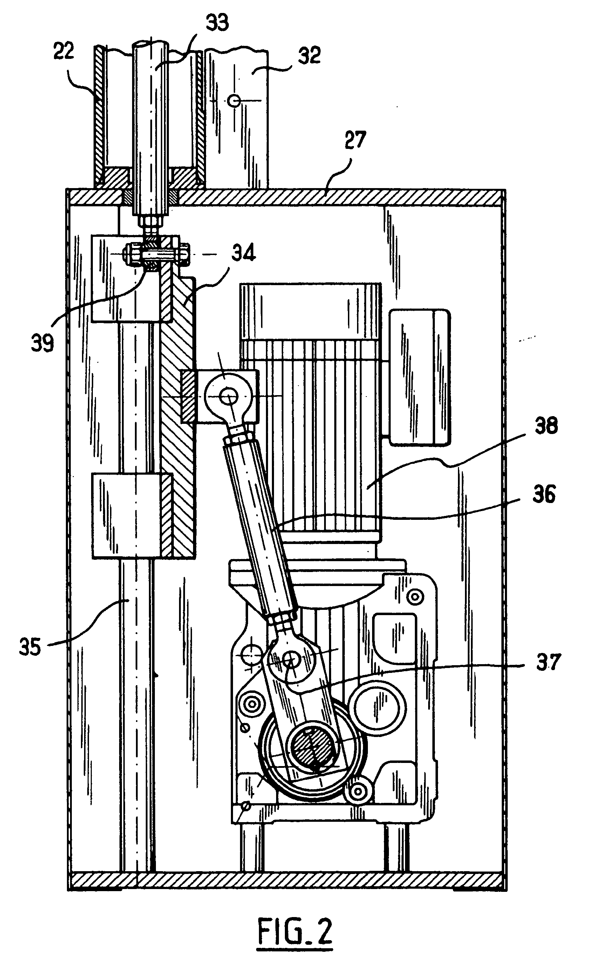

Chaque cylindre de dosage 22 possède une extrémité inférieure reliée à la platine 27 pour s'étendre perpendiculairement à celle-ci. Chaque cylindre de dosage 22 reçoit un piston 32 mobile entre une position basse d'aspiration et une position haute de refoulement. Le piston 32 est relié par une tige 33 traversant le fond du cylindre de dosage 22 et la platine 27 à un coulisseau 34 monté sur une glissière 35 fixée sous la platine 27 perpendiculairement à celle-ci. Le coulisseau 34 est relié par l'intermédiaire d'une bielle 36 à un maneton 37 solidaire d'un arbre de sortie d'un servomoteur 38 également fixé sous la platine 27 (voir la figure 2). De préférence, la longueur de la bielle 36 est réglable pour permettre de régler la position du piston. On peut également prévoir que la distance entre le maneton 37 et l'arbre de sortie soit réglable, ce qui permettrait d'ajuster la course du piston à la quantité à doser. La tige 33 est reliée au coulisseau 34 par l'intermédiaire d'une liaison rotule 39.

Le fonctionnement de la machine doseuse conforme à l'invention est similaire sur son principe à celui des machines doseuses connues.

On notera toutefois que les servomoteurs 19 entraînant les vis de transfert 10 et le servomoteur 38 entraînant les pistons 32 peuvent être paramètrés indépendamment les uns des autres de manière à régler précisément d'une part la quantité de produit à doser et d'autre part la compression éventuelle du produit à doser dans le cylindre de dosage 22.

Pour nettoyer la machine de dosage, on bascule l'entonnoir 6 pour nettoyer la cuve 3 et les vis de transferts 10.

On amène également les vannes à tournant 21 de leur position active à leur position inactive.

Pour ce faire, on amène d'abord les vannes à tournant de leur position active à leur première position intermédiaire en agissant sur l'excentrique 21, avant de faire basculer l'élément support 23 et les vannes à tournant 21 dans leur deuxième position intermédiaire puis dans leur position inactive. Ainsi, on limite les efforts qui sont exercés sur les parties en contact des cylindres de dosage 22, des conduits 12 et des corps des vannes à tournant 21 et on limite les risques de détérioration des éléments d'étanchéité.

Bien entendu, l'invention n'est pas limitée au mode de réalisation décrit et on peut y apporter des variantes de réalisation sans sortir du cadre de l'invention tel que défini par les revendications.

En particulier, la liaison des vannes à tournant 21 avec le bâti 1 peut avoir une structure différente de celle décrite mais, comme celle-ci, permet de préférence de décoller les vannes à tournant 21 des conduits 12 et des cylindres de dosage 21 respectivement selon une direction sensiblement axiale des conduits et une direction sensiblement axiale des cylindres lors de leur mouvement de la position active à la position inactive.

En outre, l'angle entre le conduit 12 et le cylindre de dosage 22 peut être différent de 90°, il est alors de préférence supérieur à 90°.

## Revendications

1. Machine doseuse comportent un bâti (1) sur lequel sont montés une trémie (2), au moins un conduit (12) débouchant dans la trémie à proximité d'un fond.de celle-ci et recevant une partie d'une vis de transfert (10) s'étendant au fond de la trémie, et au moins un cylindre de dosage (22) qui reçoit à coulissement un piston d'aspiration et de refoulement (32) et qui est raccordé au conduit par une vanne à tournant (21) en contact avec une extrémité libre du conduit, le cylindre de dosage (22) et le conduit (12) ayant des axes formant entre eux un angle d'au moins 90° environ, le conduit (12) et la vis de transfert (10) étant sensiblement horizontaux, **caractérisée en ce que** le cylindre de dosage (22) s'étend de façon sensiblement verticale sous la vanne à tournant (21).

2. Machine doseuse selon la revendication 1, **caractérisée en ce que** le piston (32) et la vis de transfert (10) sont actionnés chacun par un moteur associé (19, 38).

3. Machine doseuse selon la revendication 2, **caractérisée en ce que** la trémie (2) comporte un racleur (8) monté pour pivoter dans la trémie et associé à un moteur d'entraînement indépendant.

4. Machine doseuse selon l'une quelconque des revendications 1 à 3, **caractérisée en ce que** la vanne à tournant (21) est montée sur le bâti (1) pour être déplaçable entre une position active dans laquelle elle est appliquée contre le conduit (12) et le cylindre de dosage (22) et une position inactive dans laquelle elle est écartée du conduit et du cylindre de dosage pour libérer l'accès à ceux-ci.

5. Machine doseuse selon la revendication 4, **caractérisée en ce qu'**elle comprend des moyens pour décoller la vanne à tournant (21) du conduit (12) et du cylindre de dosage (22) respectivement selon une direction sensiblement axiale du conduit et une direction sensiblement axiale du cylindre.

6. Machine doseuse selon la revendication 5, **caractérisée en ce que** la vanne à tournant (21) est montée sur le bâti (1) pour pivoter autour d'un axe parallèle à l'axe du cylindre de dosage (22) entre la position inactive et une position dégagée proche de la position active et dans laquelle la vanne à tournant est légèrement espacée du conduit (12) et du cylindre de dosage (22).

7. Machine doseuse selon la revendication 6, **caractérisée en ce que** la vanne à tournant (21) est montée sur le bâti (1) pour pivoter autour d'un axe sensiblement perpendiculaire à l'axe du conduit (12) et à l'axe du cylindre de dosage (22) entre une position dans laquelle elle est appliquée contre le conduit (12) et une position dans laquelle elle est légèrement espacée du conduit (12).

8. Machine doseuse selon la revendication 6 ou la revendication 7, **caractérisée en ce que** la vanne à tournant (21) est montée sur le bâti (1) pour pivoter autour d'un axe sensiblement parallèle à l'axe du conduit (12) entre une position dans laquelle elle est appliquée contre le cylindre de dosage (22) et une position dans laquelle elle est légèrement espacée du cylindre de dosage.

## Claims

1. A metering machine comprising a frame (1) receiving a hopper (2), at least one duct (12) opening out into the hopper in the vicinity of a bottom thereof and receiving firstly a portion of a transfer screw (10) extending at the bottom of the hopper, and at least one metering cylinder (22) which slidably receives a suction and delivery piston (32) and which is connected to the duct via a plug valve (21) in contact with a free end of the duct, the metering cylinder (22) and the duct (12) having axes forming an angle of approximately at least 90° between them and the duct (12) and the transfer screw (10) being substantially horizontal, **characterized in that** the metering cylinder (22) extends substantially vertically under the plug valve (21).

2. A metering machine according to claim 1, **characterized in that** the piston (32) and the transfer screw (10) are actuated by respective associated motors (19, 38).

3. A metering machine according to claim 2, **characterized in that** the hopper (2) includes a scraper (8) mounted to pivot in the hopper and associated with an independent drive motor.

4. A metering machine according to any one of claims 1 to 3, **characterized in that** the plug valve (21) is mounted on the frame (1) to be movable between an active position in which it is applied against the duct (12) and the metering cylinder (22) and an inactive position in which it is spaced apart from the duct and from the metering cylinder to give access to them.

5. A metering machine according to claim 4, **characterized in that** it includes means for lifting the plug valve (21) away from the duct (12) and from the metering cylinder (22) respectively in a substantially axial direction of the duct and in a substantially axial direction of the cylinder.

6. A metering machine according to claim 5, **characterized in that** the plug valve (21) is mounted on the frame (1) to pivot about an axis parallel to the axis of the metering cylinder (22) between the inactive position and a disengaged position close to the active position and in which the plug valve is slightly spaced apart from the duct (12) and from the metering cylinder (22).

7. A metering machine according to claim 6, **characterized in that** the plug valve (21) is mounted on the frame (1) to pivot about an axis that is substantially perpendicular to the axis of the duct (12) and to the axis of the metering cylinder (22) between a position in which it is applied against the duct (12) and a position in which it is slightly spaced apart from the duct (12).

8. A metering machine according to claim 6 or claim 7, **characterized in that** the plug valve (21) is mounted on the frame (1) to pivot about an axis that is substantially parallel to the axis of the duct (12) between a position in which it is applied against the metering cylinder (22) and a position in which it is slightly spaced apart from the metering cylinder.

## Patentansprüche

1. Dosiermaschine, umfassend ein Gestell (1), an dem ein Fülltrichter (2), mindestens eine Leitung (12), die in den Fülltrichter nahe einem Boden desselben mündet und einen Teil einer sich am Boden des Fülltrichters erstreckenden Förderschnecke (10) aufnimmt, und mindestens ein Dosierzylinder (22) angebracht sind, der einen Ansaug- und Förderkolben (32) verschiebbar aufnimmt und mit der Leitung über einen Drehschieber (21) verbunden ist, der mit einem freien Ende der Leitung in Kontakt steht, wobei der Dosierzylinder (22) und die Leitung (12) Achsen haben, die zwischen sich einen Winkel von mindestens etwa 90° bilden, und wobei die Leitung (12) und die Förderschnecke (10) im Wesentlichen horizontal sind, **dadurch gekennzeichnet, dass** sich der Dosierzylinder (22) im Wesentlichen vertikal unter dem Drehschieber (21) erstreckt.

2. Dosiermaschine nach Anspruch 1, **dadurch gekennzeichnet, dass** der Kolben (32) und die Förderschnecke (10) jeweils von einem dazugehörigen Motor (19, 38) angetrieben werden.

3. Dosiermaschine nach Anspruch 2, **dadurch gekennzeichnet, dass** der Fülltrichter (2) einen Abstreifer (8) umfasst, der drehbar in dem Fülltrichter gelagert und mit einem unabhängigen Antriebsmotor verbunden ist.

4. Dosiermaschine nach einem der Ansprüche 1 bis 3, **dadurch gekennzeichnet, dass** der Drehschieber (21) derart an dem Gestell (1) gelagert ist, dass er zwischen einer aktiven Stellung, in der er an der Leitung (12) und dem Dosierzylinder (22) anliegt, und einer inaktiven Stellung verschoben werden kann, in der er zur Leitung und zum Dosierzylinder beabstandet ist, um den Zugang zu diesen freizugeben.

5. Dosiermaschine nach Anspruch 4, **dadurch gekennzeichnet, dass** sie Mittel umfasst, um den Drehschieber (21) von der Leitung (12) und von dem Dosierzylinder (22) in eine im Wesentlichen axiale Richtung der Leitung bzw. eine im Wesentlichen axiale Richtung des Zylinders zu lösen.

6. Dosiermaschine nach Anspruch 5, **dadurch gekennzeichnet, dass** der Drehschieber (21) derart an dem Gestell (1) gelagert ist, dass er um eine zur Achse des Drehzylinders (22) parallele Achse zwischen der inaktiven Stellung und einer ausgerückten Stellung schwenken kann, die nahe der aktiven Stellung ist und in der der Drehschieber zur Leitung (12) und zum Dosierzylinder (22) leicht beabstandet ist.

7. Dosiermaschine nach Anspruch 6, **dadurch gekennzeichnet, dass** der Drehschieber (21) derart an dem Gestell (1) gelagert ist, dass er um eine zur Achse der Leitung (12) und zur Achse des Dosierzylinders (22) im Wesentlichen senkrechte Achse zwischen einer Stellung, in der er an der Leitung (12) anliegt, und einer Stellung schwenken kann, in der er leicht zur Leitung (12) beabstandet ist.

8. Dosiermaschine nach Anspruch 6 oder Anspruch 7, **dadurch gekennzeichnet, dass** der Drehschieber (21) derart an dem Gestell (1) gelagert ist, dass er um eine zur Achse der Leitung (12) im Wesentlichen parallele Achse zwischen einer Stellung, in der er an dem Dosierzylinder (22) anliegt, und einer Stellung schwenken kann, in der er leicht zum Dosierzylinder beabstandet ist.
